**Europäisches Patentamt**

**European Patent Office**

**Office européen des brevets**

(11) Veröffentlichungsnummer: **0 353 536**
A1

## (12) EUROPÄISCHE PATENTANMELDUNG

(21) Anmeldenummer: 89113122.9

(22) Anmeldetag: 18.07.89

(51) Int. Cl.⁴: **E06C 1/32 , F16C 11/12 , E05D 1/02**

(30) Priorität: 26.07.88 DE 3825300

(43) Veröffentlichungstag der Anmeldung:
07.02.90 Patentblatt 90/06

(84) Benannte Vertragsstaaten:
**AT CH DE ES FR GB IT LI**

(71) Anmelder: **Hailo-Werk Rudolf Loh GmbH & Co. KG**
**Industriestrasse**
**D-6342 Haiger(DE)**

(72) Erfinder: **Petri, Christof**
**Lindenstrasse 94**
**D-6340 Dillenburg-Frohnhausen(DE)**

(74) Vertreter: **Vogel, Georg**
**Pat.-Ing. Georg Vogel**
**Hermann-Essig-Strasse 35**
**D-7141 Schwieberdingen(DE)**

(54) **Gelenk für eine Mehrzweckleiter.**

(57) Gelenk für eine Mehrzweckleiter aus mindestens zwei Leiterteilen, deren Längsholme an den Verbindungsstellen in gelenkig miteinander verbindbare Gelenkteile mit Gelenkkörpern auslaufen. Die Gelenkkörper (26) sind aus Kunststoff ausgebildet. Oberhalb und/oder unterhalb der Gelenkachse ist ein elastisch verformbarer Stauchabschnitt (30) ausgebildet, dessen dem Boden zugekehrte bzw. vom Boden abgekehrte Seite längenveränderbar ist.

FIG.1

EP 0 353 536 A1

## Gelenk für eine Mehrzweckleiter

Die Erfindung betrifft ein Gelenk für eine Mehrzweckleiter aus mindestens zwei Leiterteilen, deren Längsholme an den Verbindungsstellen in gelenkig miteinander verbindbare Gelenkteile mit Schenkeln und Gelenkkörpern auslaufen.

Bei herkömmlichen Leitern ist das Gelenk aus Metall ausgebildet und regelmäßig ein integraler Bestandteil der Längsholme. Die Herstellung eines derartigen Gelenkes ist jedoch mit Kosten verbunden, die einen nicht unwesentlichen Teil der Gesamtherstellungskosten einer Leiter bilden, und zwar trotz der Tatsache, daß der Materialaufwand, der mit der Herstellung eines Gelenkes verbunden ist, im Vergleich zum gesamten Materialaufwand verhältnismäßig gering ist.
Ein weiterer Nachteil, mit dem die bekannte Leiter behaftet ist, besteht darin, daß in die Gelenke Feuchtigkeit und unter Umständen auch Verunreinigungen gelangen können, wodurch wiederkehrende Kontrollen erforderlich sind.

Bei gattungsgemäßen Gelenken der eingangs genannten Art, wie sie z.B. in der CH-PS 192 115 beschrieben sind, ist das Gelenk zwischen den einander zugekehrten Innenseiten der Längsholme angeordnet, wobei die Beschläge an den Innenseiten angebracht sind. Oberhalb der Gelenke und der Längsholme sind Schutzkörper angeordnet, durch die eine Verletzung des Benutzers verhindert werden soll. Dieses Gelenk besteht jedoch aus verhältnismäßig vielen Teilen und ist mit den Holmen an mehreren Stellen verbunden, so daß der Zusammenbau der Leiter aufwendiger ist als bei herkömmlichen Leitern.

Ferner geht aus der DE-PS 236 623 ein Scheitelgelenkband für Stehleitern hervor, dessen Stufenteil am unteren Ende aufgebogen ist, so daß er in die Nut für die oberste Leiterstufe paßt und mit dieser fest verbindbar ist. Der andere Teil des Scheitelgelenkbandes ist auf den Längsseiten mit Einschnitten versehen, und die dadurch entstehenden Teile werden nach Einschieben des Bandes in einen Schlitz der Stütze nach rechts und nach links umgebogen und an die abgerundeten Kanten der Stütze angepreßt, wodurch die beiden Schlitzwandungen der Stütze zusammengehalten werden.

Ausgehend von dem obigen Stand der Technik liegt der Erfindung die Aufgabe zugrunde, ein Gelenk zu schaffen, das einerseits mit aus Hohlprofilstücken bestehenden Leiterholmen schnell und einfach verbindbar und andererseits einfach herstellbar ist.

Die gestellte Aufgabe wird erfindungsgemäß dadurch gelöst, daß die Gelenkkörper aus Kunststoff ausgebildet sind, daß oberhalb und/oder unterhalb der Gelenkachse ein elastisch verformbarer Stauchabschnitt ausgebildet ist, dessen dem Boden zugekehrte bzw. vom Boden abgekehrte Seite längenveränderbar ist, und daß die Schenkel in die Längsholme einsteck- oder einpreßbar sind.

Man erkennt, daß die Erfindung jedenfalls dann verwirklicht ist, wenn das mit den Holmen durch Steckverbindungen verbindbare Gelenk aus einem strapazierfähigen und wetterbeständigen Kunststoff besteht, dessen mechanischen Eigenschaften über mehrere Jahre hinaus annähernd konstant sind und bei dem die bei Gelenken üblichen Schwenkbewegungen zu keiner merklichen Veränderung der Innenstruktur führen. Solche Kunststoffe werden gewöhnlich zur Herstellung einer gelenkigen Verbindung zwischen einem Surfbrett und einem Mast verwendet und sind unter der Bezeichnung "Hydril" bekannt.

Weitere zweckmäßige und vorteilhafte Ausgestaltungen der Erfindung gehen aus den Unteransprüchen hervor.

Eine besonders vorteilhafte Ausgestaltung der Erfindung sieht vor, daß der Außenumriß des Querschnittes des Stauchabschnittes etwa die Form eines Dreiecks besitzt. Um das Gelenk auch aus anderen Kunststoffen, die jedoch nicht die gewünschte Festigkeit oder Härte besitzen, herstellen zu können, sieht eine weitere zweckmäßige Ausgestaltung der Erfindung vor, daß der Gelenkkörper einstückig ausgebildet ist und ein in ihm integriertes Scharnier aufweist. Hierbei ist es besonders zweckmäßig, wenn das Scharnier aus einem Stahlgewebe besteht, das sich quer zu den Längsholmen erstreckt und die Gelenkteile eines Gelenkes verbindet. Dadurch wird insbesondere sichergestellt, daß die Länge des Gelenkes, gemessen quer zu den Längsholmen, konstant ist. Es kann auch nicht dazu kommen, daß die Längsholme in ihrer Längsrichtung gegeneinander versetzbar sind.

Eine weitere zweckmäßige Ausgestaltung der Erfindung sieht vor, daß die Schenkel mit den Längsholmen mittels Nieten oder Schrauben lösbar verbindbar sind. Eine gute Verbindung zwischen den Schenkeln und den Längsholmen kann jedoch auch so hergestellt werden, daß die Schenkel von jeweils mindestens einer Sprosse der Leiter durchquert sind und daß die Verbindung zwischen den Schenkeln und den Sprossen kraft- und formschlüssig ist. Man erhält somit ein Gelenk, das z.B. durch Spritzgießen herstellbar ist und das nach der Herstellung der Leiterteile in deren oberen Enden eingesteckt oder eingepreßt werden kann. Hierbei geht die Erfindung von der Erkenntnis aus, daß die Herstellungskosten von Kunststoff-Spritzgußteilen regelmäßig sehr gering sind.

Schließlich sieht eine zweckmäßige Ausgestaltung der Erfindung vor, daß die Gelenkkörper angeformte Wandpuffer besitzen.

Ein Ausführungsbeispiel der Erfindung ist in der Zeichnung schematisch dargestellt und wird im folgenden näher erläutert. Es zeigen:

Fig. 1 das obere Ende einer Doppelsprossenleiter im zusammengeklappten Zustand und

Fig. 2 die in Fig. 1 dargestellte Doppelsprossenleiter im ausgeklappten Zustand.

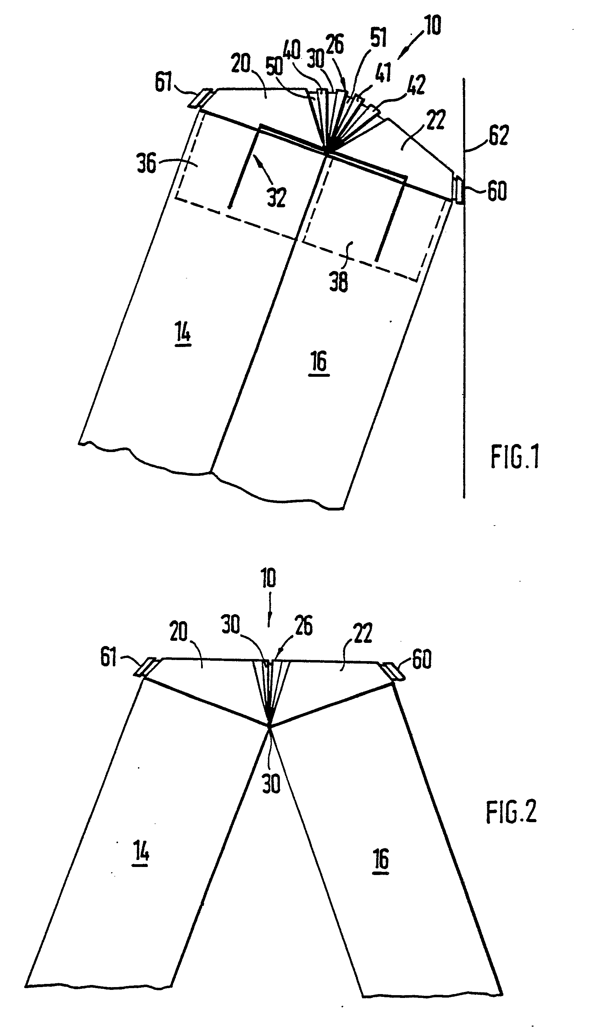

Die Fig. 1 und 2 zeigen den oberen Teil einer Doppelsprossenleiter mit Leiterteilen, deren Längsholme 14 und 16 an den Verbindungsstellen mittels eines Gelenkes 10 verbunden sind. Das Gelenk 10 besteht aus Gelenkteilen 20 und 22 mit einem Gelenkkörper 26. Der Gelenkkörper 26 besteht aus Kunststoff. Oberhalb der Gelenkachse des Gelenkes 10 ist ein elastisch verformbarer Stauchabschnitt 30 ausgebildet, dessen vom Boden abgekehrte Seite längenveränderbar ist. Der Stauchabschnitt 30 hat im wesentlichen die Form eines dreiseitigen Prismas, er kann jedoch auch als Balg ausgebildet sein.

Der Stauchabschnitt 30 besitzt ferner keilförmige Segmente 40, 41 und 42, zwischen denen verformbare Abschnitte 50 und 51 ausgebildet sind.

Man erkennt, daß der Gelenkkörper 26 einstückig ausgebildet ist und ein in ihm integriertes Scharnier 32 aufweist. Im Scharnier 32 ist ein Stahlgewebe eingebettet, das sich quer zu den Längsholmen 14 und 16 erstreckt und die Gelenkteile 20 und 22 des Gelenkes 10 verbindet. Da das Stahlgewebe vom Gelenk 10 voll aufgenommen ist, ist der Einfluß der Umwelt auf das Scharnier minimal. Das als Filmscharnier ausgebildete Scharnier 32 ist optimal biegsam, gleichzeitig aber auch zugfest.

Die Gelenkteile 20 und 22 besitzen jeweils einen Schenkel 36 und 38, die in die Längsholme 14 und 16 einsteck- oder einpreßbar sind. Die Längsholme bestehen regelmäßig aus Metall, hierbei insbesondere aus Aluminium. Die Verbindung zwischen den Schenkel 36 und 38 und den Längsholmen 14 und 16 kann mittels Nieten oder Schrauben hergestellt werden.

Handelt es sich um Leitern, deren Längsholme mehrere Meter lang sind, dann ist es zweckmäßig, das Gelenk 10 massiver und die Schenkel 36 und 38 länger auszubilden, so daß sie bis zu den Sprossen der Leiter reichen. Dann kann die Verbindung zwischen den Schenkeln und den Längsholmen so hergestellt werden, daß die Schenkel von jeweils mindestens einer Sprosse der Leiter durchquert sind, wobei die Verbindung zwischen den Schenkeln und den Sprossen kraft-und formschlüssig sein kann.

Schließlich lassen die Fig. erkennen, daß die Gelenkteile 20 und 22 jeweils einen angeformten Wandpuffer 60 und 61 besitzen, über die sich die Leiter z.B. an einer Wand 62 abstützen kann.

Bei der Herstellung einer festen Verbindung zwischen dem Gelenk 10 und den Längsholmen 14 und 16 wird so vorgegangen, daß nach der Herstellung der Leiterteile die Schenkel 36 und 38, deren Außenumriß etwa dem Innenumriß der Längsholme 14 und 16 entspricht, in die Längsholme 14 und 16 eingepreßt werden. Ist die Innenwand der Längsholme unregelmäßig und insbesondere rauh, dann sind weitere Verbindungskörper zur Herstellung einer festen Verbindung zwischen den Schenkel 36 und 38 und den Längsholmen 14 und 16 nicht erforderlich, da der vorhandene Reibschluß zwischen den Teilen hinreichend groß ist.

Bezüglich des Scharnieres 32 sei noch angemerkt, daß es auch aus gelenkig miteinander verbindbaren Blechstücken, die abgewinkelt sind, bestehen kann, wodurch die Festigkeit der Gelenkteile 20 und 22 sowie der Schenkel 36 und 38 deutlich erhöht werden kann.

## Ansprüche

1. Gelenk für eine Mehrzweckleiter aus mindestens zwei Leiterteilen, deren Längsholme an den Verbindungsstellen in gelenkig miteinander verbindbare Gelenkteile mit Schenkeln und Gelenkkörpern auslaufen,
dadurch gekennzeichnet,
daß die Gelenkkörper (26) aus Kunststoff ausgebildet sind,
daß oberhalb und/oder unterhalb der Gelenkachse ein elastisch verformbarer Stauchabschnitt (30) ausgebildet ist, dessen dem Boden zugekehrte bzw. vom Boden abgekehrte Seite längenveränderbar ist, und
daß die Schenkel (36,38) in die Längsholme (14,16) einsteck- oder einpreßbar sind.

2. Gelenk nach Anspruch 1,
dadurch gekennzeichnet,
daß der Außenumriß des Querschnittes des Stauchabschnittes (30) etwa die Form eines Dreiecks besitzt.

3. Gelenk nach Anspruch 1 oder 2 mit einem Scharnier,
dadurch gekennzeichnet,
daß der Gelenkkörper (26) mit dem Scharnier (32) einstückig ausgebildet ist.

4. Gelenk nach Anspruch 3,
dadurch gekennzeichnet,
daß das Scharnier (32) ein Filmscharnier ist.

5. Gelenk nach einem der Ansprüche 1 bis 4,
dadurch gekennzeichnet,
daß das Gelenk aus einem Zweikomponenten-Kunststoff besteht, derart, daß der Gelenkkörper (26) aus einem weicheren Kunststoff besteht als die Gelenkteile (20,22).

6. Gelenk nach einem der Ansprüche 1 bis 5, dadurch gekennzeichnet, daß in das Scharnier (32) ein Stahlgewebe, Stahlseile oder dgl. eingebettet ist bzw. sind, das bzw. die sich quer zu den Längsholmen und von einem Gelenkteil bis zum anderen erstrecken.

7. Gelenk nach einem der Ansprüche 1 bis 6, dadurch gekennzeichnet, daß die Schenkel (36,38) mit den Längsholmen (14,16) mittels Nieten oder Schrauben lösbar verbindbar sind.

8. Gelenk nach einem der Ansprüche 1 bis 7, dadurch gekennzeichnet, daß die Schenkel von jeweils mindestens einer Sprosse der Leiter durchquert sind und daß die Verbindung zwischen den Schenkeln und den Sprossen kraft- und formschlüssig ist.

9. Gelenk nach einem der Ansprüche 1 bis 8, dadurch gekennzeichnet, daß die Gelenkteile (20,22) angeformte Wandpuffer (60,61) besitzen.

FIG.1

FIG.2

A 7286

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 741 843 (A. LOUIS) <br> * Spalte 2, Zeile 36 – Spalte 3, Zeile 38; Figuren 1-3 * <br> --- | 1,3,4 | E 06 C 1/32 <br> F 16 C 11/12 <br> E 05 D 1/02 |
| A | US-A-3 232 333 (G.E. DIXON) <br> * Spalte 3; Figuren 2,3 * <br> --- | 1,3 | |
| A | GB-A-2 017 805 (P.W. ALMOND et al.) <br> * Seite 1, Zeilen 80-115; Figuren 1-3 * <br> --- | 1,3,4 | |
| A | FR-A-2 324 502 (DETROIT MARINE ENG.) <br> * Seite 2, Zeilen 24-28; Seite 6, Zeilen 10-15; Figuren 1-7 * <br> ----- | 1,7 | |

**RECHERCHIERTE SACHGEBIETE (Int. Cl.4)**

E 06 C
E 05 D
F 16 C
F 16 D

Der vorliegende Recherchenbericht wurde für alle Patentansprüche erstellt

| Recherchenort | Abschlußdatum der Recherche | Prüfer |
|---|---|---|
| DEN HAAG | 18-10-1989 | RIGHETTI R. |